Europäisches Patentamt

European Patent Office

Office européen des brevets

(11) Publication number: **0 100 564**
**A1**

(12) **EUROPEAN PATENT APPLICATION**

(21) Application number: **83200760.3**

(22) Date of filing: **28.05.83**

(51) Int. Cl.³: **G 01 F 23/26**

(30) Priority: **15.07.82 IT 5351382 U**

(43) Date of publication of application:
**15.02.84 Bulletin 84/7**

(84) Designated Contracting States:
**DE FR GB IT**

(71) Applicant: **A.G. INTERNATIONAL S.p.A.**
**Via Goita, 31**
**I-10042 Nichelino (Torino)(IT)**

(72) Inventor: **Ricucci, Marco**
**Via Goito, 31**
**I-10042 Nichelino (Torino)(IT)**

(74) Representative: **Lotti, Giorgio**
**c/o Ing. Barzanò & Zanardo Milano S.p.A. Via Cernaia 20**
**I-10122 Torino(IT)**

(54) **Level measuring device for dielectric liquids, comprising electrodes which form a capacitor.**

(57) A level measuring device for dielectric liquids contained in a tank comprises two electrodes (10, 11) which form a capacitor and dip into the liquid (15) contained in the tank; each electrode (10, 11) is connected electrically to an external circuit (16) for determining the value of the liquid level defined by the capacitance of the capacitor and by the dielectric constituted by the liquid into which they dip; the determined information is fed to user means (32) and/or display means (20) therefor.

Fig.2

EP 0 100 564 A1

COMPLETE DOCUMENT

0100564

DESCRIPTION

The invention relates to a level measuring device for dielectric liquids which comprises electrodes forming a capacitor.

The device according to the invention can be used in various applications such as tanks of petrol filling stations, storage tanks for fuel used for private or public heating, or motor vehicle fuel tanks. As this latter is the preferred application, reference will be made exclusively thereto, although by way of non-limiting example.

Motor vehicle fuel tanks normally contain floats connected to a potentiometer which as a result of the rising or lowering of the float feed the value of the fuel level to an indicator disposed on the vehicle dashboard.

These devices are of extreme constructional simplicity, but they are also very inaccurate in particular at low fuel levels, ie precisely under those conditions in which high accuracy is required. In this respect, a warning lamp indicating the so-called reserve supply comes into operation at the lower fuel levels, and for this reason the motorist needs to be accurately informed regarding the quantity of fuel still available when it begins to run out.

However, it happens that because the float is provided with an arm hinged to the potentiometer, the float jumps in an uncontrolled manner when jolts occur due to rough ground, causing intermittent blinking indicative of the reserve condition, which would otherwise not even be indicated. Again, in the case of sharp bends the fuel moves from one side to the other of the tank, and the float follows a level which varies repeatedly, to again cause the reserve indicator to blink, thus wrongly informing the motorist.

This happens precisely because in following the fuel level, the float rotates about its arm pivot, thus considerably amplifying the level measurement.

The invention provides a device of simple construction in which the float is dispensed with by replacing it by two electrodes, advantageously but not exclusively cylindrical, which dip into the tank, and of which the static state offers the most apparent advantage of not comprising movable mechanical parts subject to wear, with consequent deterioration with time which would reduce the reliability of the system.

The function of the electrodes corresponds to that of the float in that the two electrodes act as the plates of a capacitor, and the liquid in the tank which penetrates between them acts as a variable dielectric. Consequently, the variation in the liquid level varies the capacitance determined across the two electrodes, this being suitably converted into a signal (eg. current) and fed to the level indicator instrument.

This device therefore dispenses with dynamic float systems, of which the defects have been mentioned heretofore, and instead means are obtained for measuring the liquid level which exclusively sense the variation in this latter, and not external phenomena such as jolts, undulations and inclination of the tank, this being due obviously to the form of the transducer.

Its extreme simplicity makes it of low cost, of easy assembly in any tank, and of extreme reliability even over a very long period.

These and further objects which will be more apparent hereinafter are attained according to the invention by a level measuring device for dielectric liquids, characterised by comprising two electrodes which form a capacitor, the electrodes dipping into the liquid contained in the tank, and each being connected electrically to an external circuit for determining, and transferring to user means, the liquid level value defined by the capacitance of the capacitor formed by the two electrodes and the dielectric which is disposed therebetween and is constituted by the quantity of liquid into which they dip.

The invention is described hereinafter with reference to the accompanying drawings in which:

Figure 1 is a perspective view of the device;

Figure 2 is a portion of a tank containing the device of Figure 1, and an example of a block circuit diagram connected to said device;

Figure 3 is a diagram showing a second application of the device.

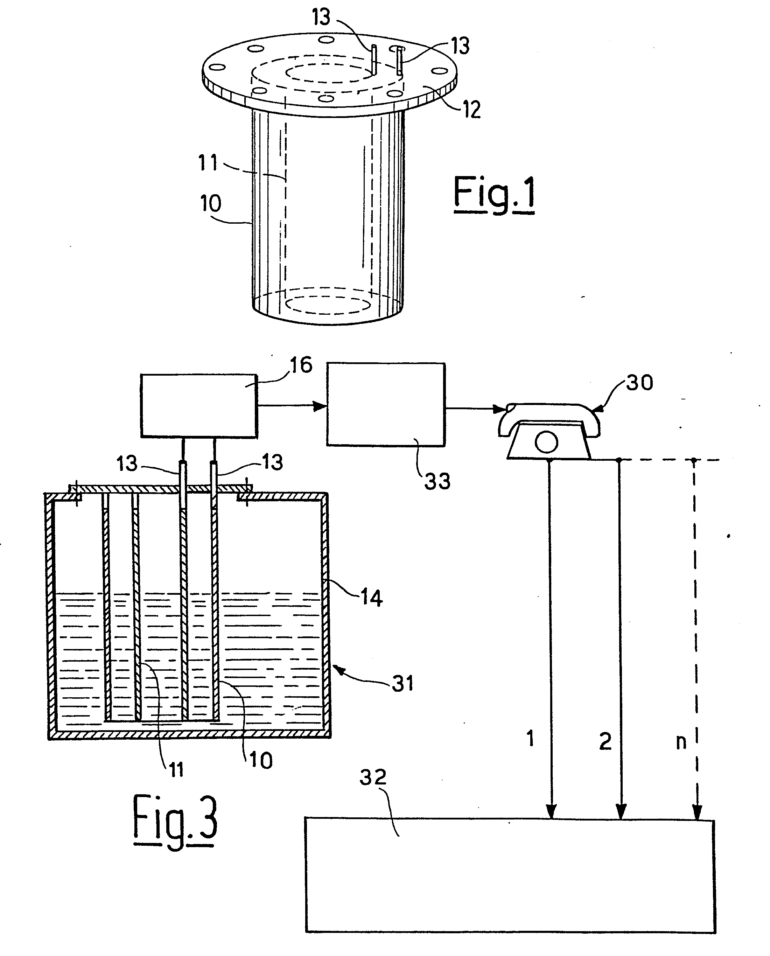

Figure 1 shows the device constituted by two coaxial cylindrical electrodes 10 and 11 connected to a flange 12 for fixing to the wall of a tank.

From each electrode there emerges a connection 13 for the electrical circuit which provides typical frequency sensitisation of the transducer 10, 11 thus formed, and therefore detects the value of the charge thereon to transform it into a proportional current signal for the indicator instrument.

The coaxial cylindrical form of the electrodes 10 and 11 is obviously given by way of example only, in that it appears to be the most simple and economical from the constructional and applicational aspects, however the electrodes 10 and 11 can be of any other configuration such as in the form of a U, or again coaxial but diverging or converging, or any other form considered suitable for the specific use.

The invention in fact also allows the use of non-aligned electrodes, or of non-parallel electrodes if these are of plane faces in order to make the response of the assembly non-linear and compensate for example for the non-linearity of conventional instruments which by virtue of their construction have their maximum sensitivity at the beginning of the scale and a scale compression towards its end.

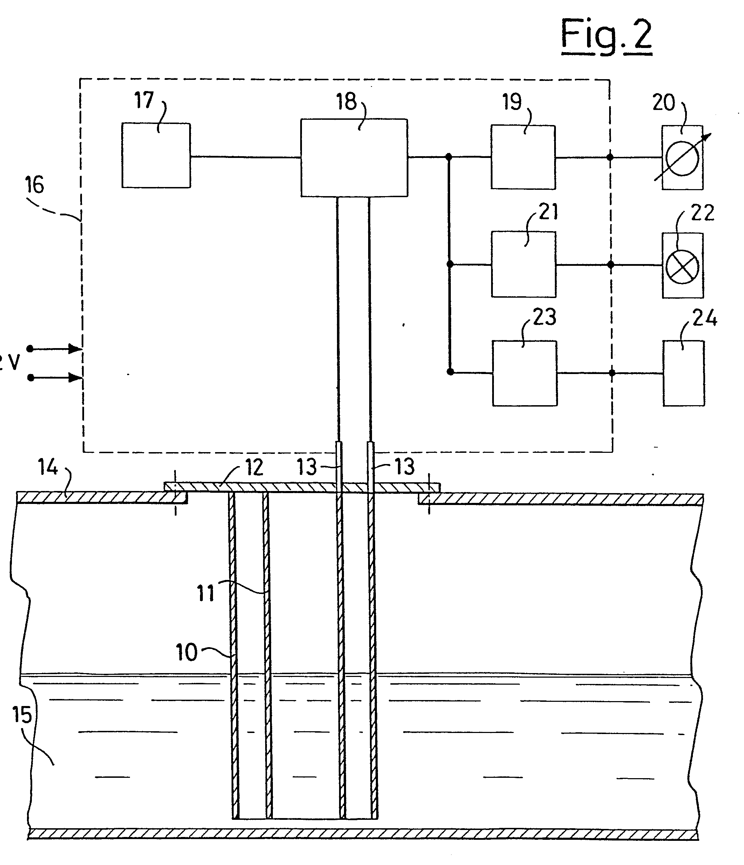

Figure 2 shows one application of this device, which is inserted in a tank 14 containing a liquid 15.

As the most obvious application of the device is for an automobile, the liquid will be fuel (petrol or diesel oil), and thus a possible block diagram is also shown of the electric circuit 16 which feeds the signal determined by the device to the instrument disposed on the vehicle dashboard.

An oscillator 17 is connected to a frequency-voltage converter 18, ie for converting the capacitance-voltage value of the transducer 10, 11 which varies as a function of the level of the fuel 15, and thus of the dielectric disposed between the two plates 10 and 11 of the capacitor.

The voltage value is fed from the converter 18 to various units, namely a voltage-current converter 19 which feeds the fuel level

indicator 20 (usually an analog milliammeter), a reserve detector 21 which feeds an indicator 22 (usually a warning lamp) at a predetermined level, and an amplifier 23 of which the output is fed to a contained computer 24 (a sophisticated instrument at present used on high-quality vehicles).

The circuit heretofore described obviously possesses no inventive characteristics, but is given as a pure example of one possible application of the device, which can however comprise different more simple or more sophisticated circuits without its function being altered or its advantages being diminished.

In practice, the entire concept is based in fact on the capacitance
of the capacitor, which varies as the level of the dielectric 15
varies between the electrodes 10 and 11 which form the capacitor plates.
The liquid contained between them is not subject to jolts, undulations
and the like because of the mechanical and electronic configuration,
so that the signal provided by the capacitor always corresponds to the
true level of fuel contained in the tank in a calm state for the time
necessary to integrate phenomena corresponding to sudden variations.
Further possible applications of the device include for example those
which are not directed towards the automobile sector but which are
strictly connected with the determination of fuel level (hydrocarbons)
in any container for the most general use (eg. checking the fuel oil
in tanks for heater burners and the fuel level in petrol filling
stations etc.).  These applications again comprise the use of a
capacitive transducer 10, 11 which dips into the liquid 15 in order to
provide an external signal proportional to the actual level.  The
electronic circuit connected to the transducer will be different in
the various applications in the sense of being completely appropriate
for the specific function for which it has to serve.  For example,
the formation of the electronic circuit where the application is that
of monitoring the level in tanks containing heating oil can be
mentioned.  The sensor, consisting of two concentric electrodes, is
sensitised by an electronic circuit of which the blocks are those
already described, but which are considerably more refined in their
construction.

The final element, namely the output current generator, is a FET device
having practically zero intrinsic absorption.  This is so as not to
introduce circuit computation errors which could mask the accuracy of the reading.

In the case of monitoring the level in storage tanks of petrol filling stations, the electronic circuit must monitor the level, convert the level into litres, indicate minimum stock when reached, indicate the quantity fed during fillings, check deliveries by the supply companies, check any losses from tanks etc.

In this particular case (Figure 3) it is interesting to contemplate data transmission by telephone lines 30 between the peripherals 31 and possible central processing units 32.

By connecting the central processor unit 32 to the transducer 10, 11 of each tank 14, it is able to know the quantities available on the client's premises at any instant, and to programme deliveries in accordance with the minimum allowable stock in hand, which is itself related for example to the level of activity of the periods concerned. This system makes it unnecessary for the user to manually check the condition of his storage tanks in that the system can be permanently active, and thus determine the real time state of the storage tank. The peripheral unit 31 provides an in situ solution to all the user's problems, including indicating any abnormal losses when not delivering (pumps out of operation), and correcting the contained volume to a fixed temperature. By providing the CPU 33 of the periphery with more or less intelligence, the operational range of the instrument can be broadened in terms of specification and thus in terms of functions. The transducer 10, 11 is not exposed to any power supply, but only to a very low level of energy (3-5 volts, 0.5 mA) at its typical working frequency.

A further application of the sensor is to detect harmful traces or deposits of water which exceed determined percentages in the fuel.

**0100564**

This could be done by virtue of the different nature of the water compared with the fuel, and thus immediately displayed on the display

unit.

PATENT CLAIMS

1.    A level measuring device for dielectric liquids contained in a tank, characterised by comprising two electrodes (10, 11) which form a capacitor, the electrodes dipping into the liquid (15) contained in the tank (14), and each being connected electrically (13) to an external circuit (16) for determining, and transferring to user means, liquid level values determined by the capacitance of the capacitor formed by the two electrodes (10, 11) and by the dielectric which is disposed therebetween and is constituted by the quantity of liquid (15) into which they dip.

2.    A device as claimed in claim 1, characterised in that the electrodes (10, 11) are concentric cylinders.

3.    A device as claimed in claim 1, characterised in that the user means are level indicator-display units (20).

4.    A device as claimed in claim 1, characterised in that the user means are constituted by a central processor unit (32) which receives the data from several tanks (14), each comprising a peripheral unit (31) connected to the central processor unit (32).

Fig.1

Fig.3

Fig.2

European Patent
Office

**EUROPEAN SEARCH REPORT**

Application number

| | DOCUMENTS CONSIDERED TO BE RELEVANT | | EP 83200760.3 |
|---|---|---|---|
| Category | Citation of document with indication, where appropriate, of relevant passages | Relevant to claim | CLASSIFICATION OF THE APPLICATION (Int. Cl. ³) |
| X | DE - A1  3 027 726 (NISSAN)<br>* Fig. 1A,1B,2A,2B,5; page 6, line 12 - page 8, line 15 * | 1,2,3 | G 01 F 23/26 |
| X | DE - A1 - 3 133 017 (NISSAN)<br>* Claims 1,2,3,7; fig. 7 * | 1,2,3 | |
| X,P | US - A - 4 349 882 (ASMUNDSSON)<br>* Fig. 1,2,5; column 2, lines 10-61; column 3, line 16 - column 4, line 68; column 7, line 3 - column 11, line 66 * | 1,2,4 | |
| Y | US - A - 4 296 472 (SARKIS)<br>* Fig. 1; column 1, line 61 - column 3, line 18; column 3, line 54 - column 4, line 54 * | 1,4 | TECHNICAL FIELDS SEARCHED (Int. Cl. ³) |
| Y | US - A - 3 830 090 (HERSCH)<br>* Fig. 1,2; column 2, line 45 - column 4, line 16 * | 1,4 | G 01 F 23/00 |

The present search report has been drawn up for all claims

| Place of search | Date of completion of the search | Examiner |
|---|---|---|
| VIENNA | 22-11-1983 | GRONAU |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82